# EUROPEAN PATENT APPLICATION

(11) **EP 1 772 086 A1**
(43) Date of publication of application: **11.04.2007**
(21) Application number: 05256281.6
(22) Date of filing: 08.10.2005
(51) Int. Cl.: A47J 37/12

(54) **A heated appliance having a removable bowl integrated with thermal sensors**

(71) Applicant: ELECTRICAL INVESTMENTS LIMITED, Tortola (VG)
(72) Inventor: Chung, Chi Yin, Tortola (VG); Law, Kam Shan, Tortola (VG)
(74) Representative: Wombwell, Francis

(57) **Abstract**

The present invention relates to a heated appliance having a removable bowl (1) to which, a thermal sensor (2) and thermal fuse (3) are secured by means of respective brackets (6). The respective thermal devices comprise an NTC thermistor located within NTC tube (2), while the thermal fuse comprises a thermal cutoff fuse located within fuse tube (3). The respective thermal devices have a pair of terminals (5) for connection to a connection/control interface (7) of the appliance.

By permanently securing the respective thermal devices to the base (4) or a side wall of the removable bowl (1) consistent performance of the thermostat and thermal fuse can be achieved irrespective of how often the removable bowl is removed from and reinserted into the appliance, thereby ensuring a consistent long-term performance.

## Description

The present invention relates to heated appliances, more particularly electrically-heated appliances having a removable bowl, for example deep-fat fryers, frying pans, grills and hot pots.

With conventional appliances of this type, thermostats and thermal fuses are provided to monitor and control the temperature of the contents, e.g. cooking oil and to provide a safety cut-out in the event of overheating. Such thermostats and thermal fuses are provided as separate probes, which are not permanently attached to the removable bowl. They usually comprise probes, which, when the bowl is assembled in the housing of the appliance, or coupled to a connection module provided in the housing, are brought into intimate thermal contact with the removable container to enable such to sense the temperature thereof. However, since the probes must be disconnected and reconnected every time the removable bowl is removed from the housing or re-located in such, for example following cleaning, the thermal conductivity and thereby the accuracy and effectiveness of the thermostat and thermal fuse can be effected adversely. This can occur due to contamination, for example, by dust, food residue, or the like. Further, since the removable bowl may be removed and reconnected on many occasions, inconsistencies may arise in achieving accurate and reliable repositioning of the probes, and thereby their thermal contact with the the removable bowl, leading to inaccuracies in measurement. Finally, owing to wear and tear, over a period of use, the contact surfaces may no longer achieve intimate thermal contact and thereby the performance of the sensing devices deteriorates over a period of time.

The object of the present invention is to provide an electrically heated appliance, of the type provided with a removable bowl, which overcomes the above disadvantages and maintains a consistent thermal contact between thermal sensing devices and the removable bowl.

According to the present invention electrically heated appliance is provided which seeks to achieve these objectives, constructed and arranged as set forth in the appended claims.

The present invention will now be described further with reference to the accompanying drawings in which
Figure 1 is a perspective view from underneath of a removable bowl of the present invention;

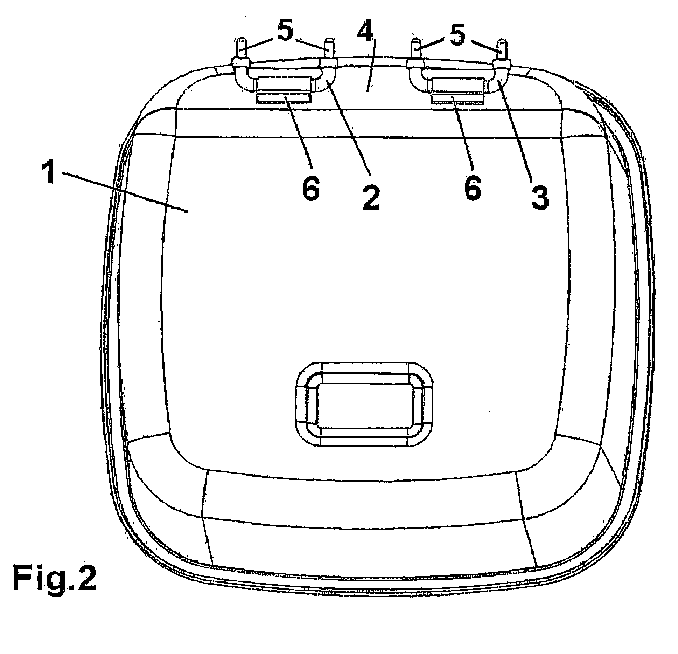

Figure 2 is an underneath plan of the bowl of Figure 1;
Figure 3 is a perspective view from one side of the removable bowl and a connection/control interface;
Figure 4 is a perspective view of the removable bowl with the connection/control interface connected to the bowl; and

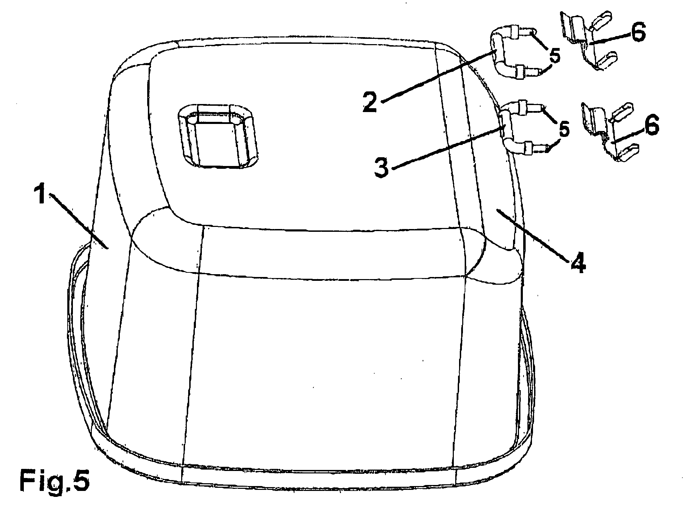

Figure 5 is an exploded view of the components of the removable bowl.

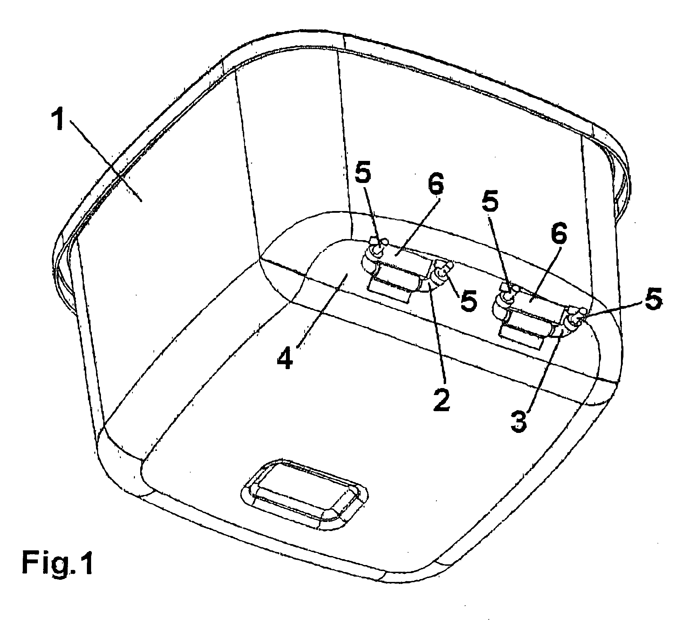

With reference to the accompanying drawings, as can be seen from Figure 1, thermal sensing devices 2 and 3 are attached to the underneath of a removable bowl 1 of an electrically heated appliance. (Alternatively, the sensing devices could be attached to a side wall of the bowl 1.) The underside of the bowl 1 would also be provided with a heating element (not shown), removably attachable thereto, when assembled into a housing (not shown). The thermal sensing devices typically comprise a negative temperature coefficient (NTC) thermistor provided in a tube 2 and a thermal cutout fuse in fuse tube 3. The NTC tube 2 is securely attached to the base 4 of the bowl by a fixing means, for example, bracket (6), by welding. Similarly, the fuse tube 3 is attached to the base 4 by means of (6) again preferably, by welding. Of course, other suitable types of fixings may be used.

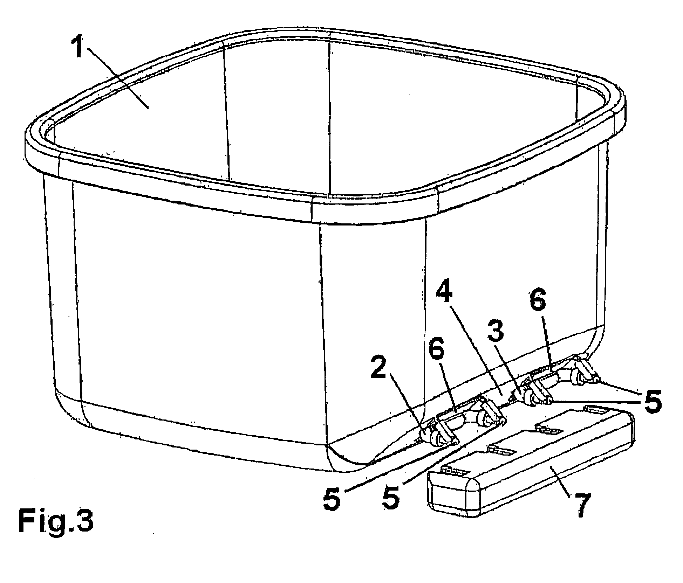

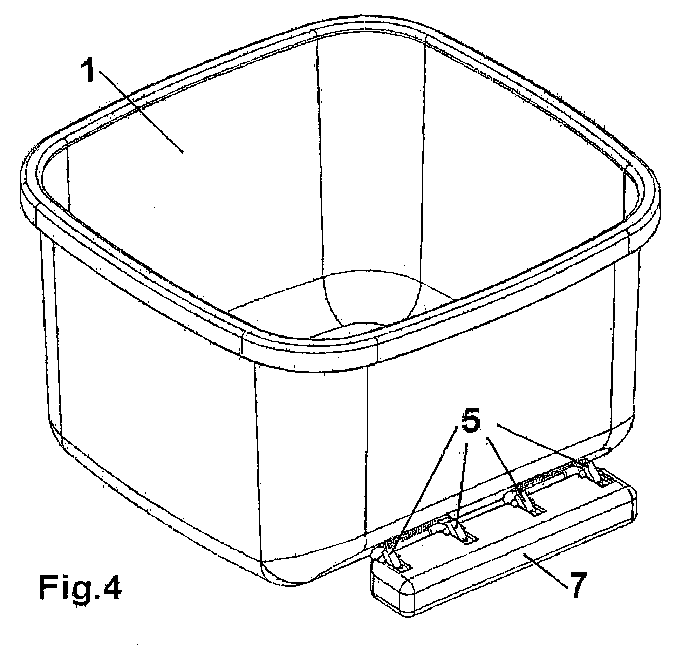

The NTC tube 2 accommodates an NTC thermistor, acting as a thermostat for enabling control of the operating temperature of the appliance. Similarly, the thermal cutoff fuse is located within the fuse tube 3 to prevent overheating. Both the NTC tube 2 and the fuse tube 3 each have a pair of terminals 5 for establishing connection with a connection/control interface 7, see Figs. 3 and 4.

By means of the permanent connection of the NTC tube 2 and the fuse tube 3 to the base 4 of the bowl 1, the thermal sensitivity and consistency of performance will not be affected by successively removing and reinstalling the removable bowl 1 in an electrically heated appliance. Further, since they are maintained in a constant position they are no longer effected by contaminants or by wear and tear and this can significantly improve the long term performance of temperature control.

## Claims

1. A heated appliance having a removable bowl (1) and including thermal sensing devices for monitoring operating temperature, **characterised in that** the thermal sensing devices (2, 3) are permanently secured to the removable bowl (1) to enable the consistent control of the operating temperature of the appliance and reliable overheating protection.

2. An appliance as claimed in claim 1, wherein the thermal sensing devices (2, 3) are secured to the base (4) of the removable bowl (1).

3. An appliance as claimed in claim 1, wherein the thermal sensing devices (2, 3) are secured to a side wall of the removable bowl (1).

4. An appliance as claimed in claim 2 or 3, wherein the thermal sensing devices (2, 3) are secured in intimate thermal contact with the removable bowl (1) by any suitable fixing means, or by welding.

5. An appliance according to any preceding claim, wherein the thermal sensing devices comprise an NTC tube (2) and a fuse tube (3).

6. An appliance according to claim 5, wherein the NTC tube (2) is secured to the base (4) or side wall of the bowl (1) and includes an NTC sensor located therein and wherein the NTC tube (2) has two connection terminals (5) for establishing connection with a control/connection interface (7) of the appliance.

7. An appliance according to claim 5 wherein the fuse tube (3) is secured to the base (4) or side wall of the bowl (1) and a thermal cut off fuse is located within such tube (3), the tube (3) having two connection terminals (5) for establishing connection to a control/connection interface (7) of the appliance.
